**Europäisches Patentamt**

**European Patent Office**

**Office européen des brevets**

(11) Veröffentlichungsnummer: **0 464 350 A1**

## (12) EUROPÄISCHE PATENTANMELDUNG

(21) Anmeldenummer: **91108156.0**

(22) Anmeldetag: **21.05.91**

(51) Int. Cl.⁵: **A47G 9/02**, A47C 27/12, B32B 7/08

(30) Priorität: **13.06.90 DE 4018946**
**26.03.91 DE 4109906**

(43) Veröffentlichungstag der Anmeldung:
**08.01.92 Patentblatt 92/02**

(84) Benannte Vertragsstaaten:
**AT BE CH DE DK ES FR GB GR IT LI LU NL SE**

(71) Anmelder: **LAMAGOLD MIT DEM GRÜNEN KREUZ NATURHAARBETTEN GmbH**
**Eichenweg 5**
**W-6349 Driedorf-Roth(DE)**

(72) Erfinder: **Jäger, Franz-Josef**
**Hauptstrasse 34**
**W-4815 Schloss Holte-Stukenbrock(DE)**

(74) Vertreter: **Schirmer, Siegfried, Dipl.-Ing. et al**
**Patentanwalt Osningstrasse 10**
**W-4800 Bielefeld 1(DE)**

(54) **Komplettbett, bestehend aus Zudeckbett, Oberbett, Kopfkissen und Zusatzmatte.**

㊗ Das Bett besitzt einen mehrschichtigen Aufbau aus tierischer Wolle (2,2') mit einem inneren flächenartigen Trägergewebe (1), wobei auf einer Seite des Trägergewebes (1) ein Vlies (3) angeordnet ist. Die tierische Wolle (2,2') ist in Form eines Flors aus Lamawolle, Merinokammgarn und Kaschmirwolle auf dem Trägergewebe (1) und dem Vlies (3) aufgewebt. Das Vlies für das Oberbett weist gegenüber dem Vlies (3) für das Unterbett eine geringere Stärke auf, wobei die Stärke zwischen 1,5 bis 3 cm betragen kann.

Zur Erzielung einer zusätzlichen therapeutischen Wirkung ist auf ein inneres flächenartiges Trägergewebe (1) ein- oder beidseitig eine Aluminiumfolie (4) aufgeklebt.

Das erfindungsgemäße Bett wird als körperfreundlich und hautsympathisch empfunden. Es ist atmungsaktiv und feuchtigkeitsregulierend und gewährleistet eine Dauerschmiegsamkeit und einen Temperaturausgleich.

FIG.1

EP 0 464 350 A1

Die Erfindung betrifft ein Komplettbett, bestehend aus Zudeckbett, Unterbett, Kopfkissen und Zusatzmatte.

Die bekannten Betten bestehen im allgemeinen aus einem mit einer Füllung versehenen Inlett. Die Füllung kann aus den verschiedensten Materialien bestehen, beispielsweise Federn oder Daunen. Es sind auch Betten bekannt, bei denen das Inlett mehrfach abgesteppt ist. Je nach der verwendeten Füllung und dem vorgesehenen Verwendungszweck können diese Betten ein Eigengewicht aufweisen, das nicht immer körperfreundlich empfunden wird, wobei Wärmestaus nicht auszuschließen sind.

Außerdem sind Betten mit einem mehrschichtigen Aufbau bekannt. Nach dem DE-GM 88 02 941.7 ist zwischen den Deckschichten aus tierischer Wolle mindestens ein flächenartiges Trägergewebe angeordnet. Bei Anordnung von zwei flächenartigen Trägergeweben ist zwischen den Trägergeweben noch eine Füllungsschicht aus Wollvlies angeordnet. Dieser Mehrschichtaufbau ist mittels eines Synthetikbandes umbördelt. Diese Umbördelung ist jedoch nicht geeignet, auf Dauer den vorgegebenen Schichtaufbau zu garantieren.

Der Erfindung liegt die Aufgabe zugrunde, ein Bett zu schaffen, das bei Gewährleistung des erhofften Temperaturausgleichs und einer Dauerschmiegsamkeit sowohl feuchtigkeitsregulierend, als auch atmungsaktiv ist und daher als körperfreundlich und hautsympathisch empfunden wird, wobei auch nach längerer Benutzung eine bleibende Struktur erhalten bleibt. Außerdem soll durch eine Zusatzmatte eine zusätzliche therapeutische Wirkung erzielt werden.

Diese Aufgabe wird erfindungsgemäß durch ein Komplettbett, bestehend aus Zudeckbett, Unterbett und Kopfkissen gelöst, die jeweils einen mehrschichtigen Aufbau aus äußeren Florschichten aus tierischer Wolle und ein inneres flächenartiges Trägergewebe aufweisen, wobei auf der unteren Seite des Trägergewebes ein Vlies angeordnet ist und die äußeren Florschichten auf dem Trägergewebe und dem Vlies aufgewebt sind. Nach einer weiteren Ausbildung der Erfindung ist der Flor aus Lamawolle, Merinokammgarn und/oder Kaschmirwolle gebildet, wobei diese Materialien gleichmäßig gemischt sein können.

Bei einer vorteilhaften Ausführungsform weisen die beiden Flore aus tierischer Wolle eine Stärke von 3 cm und das Vlies eine Stärke zwischen 1,5 bis 3 cm auf, wobei das Vlies für das Oberbett eine geringere Stärke als das Vlies für das Unterbett aufweist. Das Unterbett kann auf der Unterseite an den vier Ecken je einen diagonal verlaufenden elastischen Spannzug aufweisen, mit dem das Unterbett auf der Matratze festlegbar ist.

Das Inlett des Kopfkissens ist erfindungsgemäß aus dem Flor aus tierischer Wolle gebildet, das eine Füllung aus Hohlfaserkugeln aufweist. Diese Hohlfaserkugeln können aus Chemiewerkstoff gebildet sein. Die Hohlfaserkugeln kommen in ihren Eigenschaften, insbesondere bezüglich der Schmiegsamkeit und der Wärmedämmfähigkeit, einer tierischen Feder relativ nahe. Durch Versuche wurde gefunden, daß die Kopfkissenfüllung aus Hohlfaserkugeln auch nach 350maligem Waschen die ursprünglichen Eigenschaften behalten hat.

Zur Erzielung der angestrebten therapeutischen Wirkung ist auf das innere flächenartige Trägergewebe ein- oder beidseitig eine Aluminiumfolie aufgeklebt. Vorteilhafterweise ist die Trägerschicht aus einem Vlies aus Chemiewerkstoff gebildet. Die beiden äußeren Abdeckschichten können aus einem synthetischen Stoff gebildet sein. Bei einer bevorzugten Ausführung weisen die äußeren Abdeckschichten jeweils eine Stärke von ca. 1,25 cm und die flächenartige Trägerschicht mit der aufgeklebten Aluminiumfolie eine Stärke von ca. 0,5 cm auf. Eine äußere Abdeckschicht ist zweckmäßigerweise mit mehr als zwei, vorzugsweise mit vier Schlaufen versehen, die an den vier Ecken angeordnet sein können.

Durch die erfindungsgemäße Ausbildung ist ein Bett geschaffen, daß körperfreundlich, hautsympathisch und atmungsaktiv ist bei Gewährleistung einer Dauerschmiegsamkeit und eines Feuchtigkeitsausgleichs. Durch das Vlies wird insbesondere die Körpertemperatur ausgeglichen. Das Bett wird angenehm wärmend ohne das Auftreten eines Wärmestaus empfunden. Durch die Verbindung der Schichten untereinander ist ein stabiler und bleibender Schichtaufbau gewährleistet. Durch die erfindungsgemäß ausgebildete Zusatzmatte wird eine zusätzliche therapeutische Wirkung erzielt.

Ein Ausführungsbeispiel der Erfindung ist in der Zeichnung dargestellt und wird nachstehend näher beschrieben. Es zeigen:

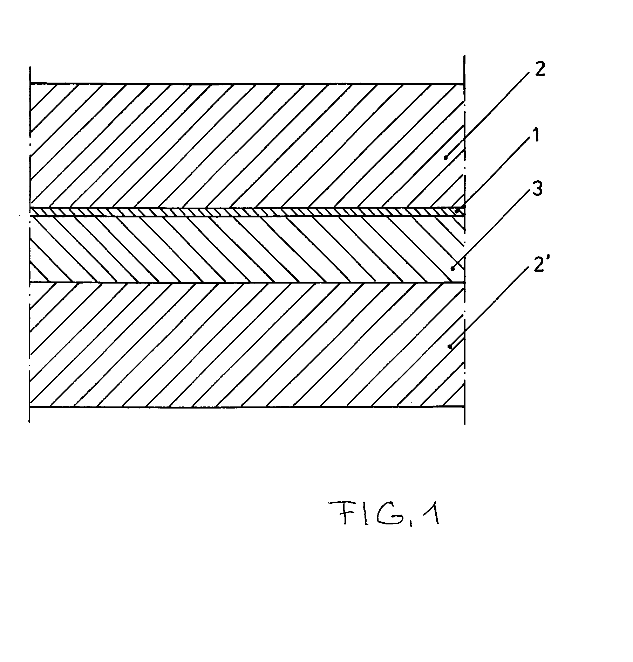

Fig. 1 einen Querschnitt durch ein Oberbett und

Fig. 2 einen Querschnitt durch eine Zusatzmatte.

Auf der Oberseite eines dünnen flächenartigen Trägergewebes 1 ist ein Flor 2 aus tierischer Wolle, bestehend aus einer Mischung aus Lamawolle, Merinokammgarn und Kaschmirwolle, in einer Stärke von 3 cm aufgesteppt. Auf der unteren Seite des Trägergewebes 1 ist ein Vlies 3 in einer Stärke von 1,5 cm angeordnet, das als Träger für einen Flor 2' aus tierischer Wolle dient.

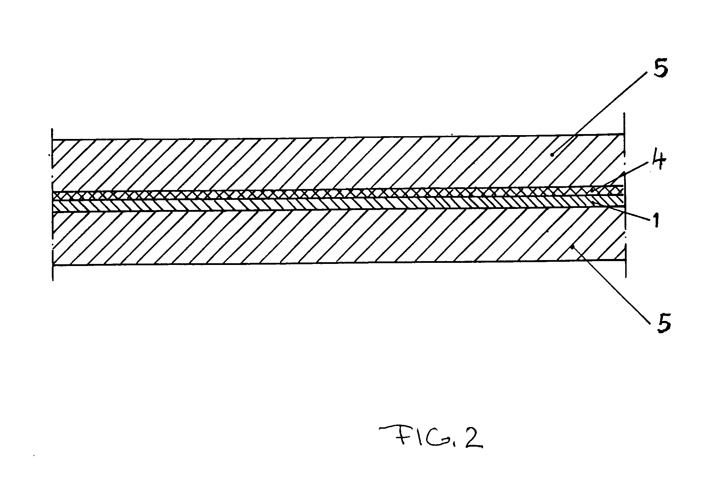

Die Zusatzmatte nach Fig. 2 besitzt ein inneres flächenartiges Trägergewebe 1 aus einem Vlies aus Chemiewerkstoff, auf das einseitig eine Aluminiumfolie 4 aufgeklebt ist. Die beiden äußeren Abdeckschichten 5 bestehen aus einem synthetischen Stoff und weisen jeweils eine Stärke von 1,25 cm auf. Die Gesamtstärke der Zusatzmatte beträgt 3 cm. An den vier Ecken einer Abdeckschicht 5 ist jeweils eine Schlaufe angeordnet. Mit diesen Schlaufen wird die Zusatzmatte unter Bildung eines Luftzwischenraums an den Lattenrost eines Bettes aufgehängt.

Aufstellung der Bezugszeichen:

| 1 | Trägergewebe |
|---|---|
| 2; 2' | Flor |
| 3 | Vlies |
| 4 | Aluminiumfolie |
| 5 | Abdeckschicht |

**Patentansprüche**

1. Komplettbett, bestehend aus Zudeckbett, Unterbett und Kopfkissen, die jeweils einen mehrschichtigen Aufbau aus äußeren Florschichten (2; 2') aus tierischer Wolle und ein inneres flächenartiges Trägergewebe (1) aufweisen, wobei auf der unteren Seite des Trägergewebes (1) ein Vlies (3) angeordnet ist und die äußeren Florschichten (2; 2') auf dem Trägergewebe (1) und dem Vlies (3) aufgewebt sind.

2. Bett nach Anspruch 1, dadurch gekennzeichnet, daß die Florschichten (2; 2') aus Lamawolle, Merinokammgarn und/oder Kaschmirwolle gebildet sind.

3. Bett nach Anspruch 2, dadurch gekennzeichnet, daß die Wolle der Florschichten (2; 2') gleichmäßig gemischt ist.

4. Bett nach einem der Ansprüche 1 bis 3, dadurch gekennzeichnet, daß die Florschichten (2; 2') aus tierischer Wolle eine Stärke von 3 cm und das Vlies (3) eine Stärke zwischen 1,5 bis 3 cm aufweisen.

5. Bett nach einem der Ansprüche 1 bis 4, dadurch gekennzeichnet, daß das Vlies (3) für das Oberbett eine geringere Stärke als das Vlies (3) für das Unterbett aufweist.

6. Bett nach einem der Ansprüche 1 bis 5, dadurch gekennzeichnet, daß das Unterbett auf der Unterseite an den vier Ecken je einen diagonal verlaufenden elastischen Spannzug aufweist.

7. Bett nach einem der Ansprüche 1 bis 4, dadurch gekennzeichnet, daß das Inlett des Kopfkissens aus dem Flor aus tierischer Wolle und die Füllung aus Hohlfaserkugeln gebildet ist.

8. Bett nach Anspruch 7, dadurch gekennzeichnet, daß die Hohlfaserkugeln aus Chemiewerkstoff gebildet sind.

9. Bett nach Anspruch 1, dadurch gekennzeichnet, daß auf das innere flächenartige Trägergewebe (1) ein- oder beidseitig eine Aluminiumfolie (4) aufgeklebt ist.

10. Bett nach Anspruch 9, dadurch gekennzeichnet, daß das Trägergewebe (1) aus einem Vlies aus Chemiewerkstoff gebildet ist.

11. Bett nach Anspruch 9 oder 10, dadurch gekennzeichnet, daß auf die Aluminiumfolien (4) bzw. die Aluminiumfolie (4) und das Trägergewebe (1) je eine äußere Abdeckschicht (5) aus einem synthetischen Stoff aufgebracht ist.

12. Bett nach einem der Ansprüche 9 bis 11, dadurch gekennzeichnet, daß die äußeren Abdeckschichten (5) jeweils eine Stärke von ca. 1,5 cm aufweisen.

13. Bett nach einem der Ansprüche 9 bis 12, dadurch gekennzeichnet, daß das flächenartige Trägergewebe (1) mit einer aufgeklebten Aluminiumfolie (4) eine Stärke von ca. 0,5 cm aufweist.

14. Bett nach einem der Ansprüche 9 bis 13, dadurch gekennzeichnet, daß eine äußere Abdeckschicht (5) mit mehr als zwei Schlaufen versehen ist.

15. Bett nach Anspruch 14, dadurch gekennzeichnet, daß an den vier Ecken einer äußeren Abdeckschicht (5) je eine Schlaufe angeordnet ist.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y,D,A | DE-U-8 802 941 (GEYER R.)<br>* Seite 7, Absatz 1 - Seite 9, Absatz 3; Abbildungen 1-4 *<br>– – – | 1,2-5,7,8, 12 | A 47 G 9/02<br>A 47 C 27/12<br>B 32 B 7/08 |
| Y | CH-A-405 639 (REFORMA-WERKE DÜLTGEN & BILLER-BECK )<br>* Seite 2, Zeile 76 - Seite 3, Zeile 2; Abbildung *<br>– – – | 1 | |
| A | US-A-4 426 414 (WILKERSON F.W.)<br>* Spalte 3, Zeile 58 - Spalte 5, Zeile 27; Abbildung 1 *<br>– – – | 1 | |
| A | US-A-4 433 019 (CHUMBLEY J.F.)<br>* Spalte 2, Zeile 51 - Spalte 3, Zeile 59; Abbildungen 1,2 *<br>– – – | 9-11 | |
| A | US-A-4 754 514 (LIMB G.J.)<br>* Spalte 3, Zeile 9 - Spalte 4, Zeile 41; Abbildungen 1-5 *<br>– – – | 11,14,15 | |
| A | AT-A-337 929 (MARIA SCHMIDT & CO.)<br>– – – – – | | |

|  |
|---|
| **RECHERCHIERTE SACHGEBIETE (Int. Cl.5)**<br><br>A 47 G<br>A 47 C<br>B 32 B |

**Der vorliegende Recherchenbericht wurde für alle Patentansprüche erstellt**

| Recherchenort | Abschlußdatum der Recherche | Prüfer |
|---|---|---|
| Den Haag | 04 Oktober 91 | ELSWORTH D.S. |